(19) Europäisches Patentamt / European Patent Office / Office européen des brevets

(11) **EP 2 385 346 B1**

(12) **FASCICULE DE BREVET EUROPEEN**

(45) Date de publication et mention
de la délivrance du brevet:
**04.01.2017 Bulletin 2017/01**

(51) Int Cl.:
**G01C 21/00** *(2006.01)* **G01C 21/16** *(2006.01)*

(21) Numéro de dépôt: **11164975.2**

(22) Date de dépôt: **05.05.2011**

(54) **Procédé d'élaboration d'une phase de navigation dans un système de navigation impliquant une corrélation de terrain**

Verarbeitungsverfahren einer Navigationsphase in einem Navigationssystem, das eine Geländekorrelation einschließt

Method for creating a navigation phase in a navigation system involving terrain correlation

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.05.2010 FR 1001942**

(43) Date de publication de la demande:
**09.11.2011 Bulletin 2011/45**

(73) Titulaire: **THALES**
**92400 Courbevoie (FR)**

(72) Inventeurs:
• **Louis, Christian**
**91400, Orsay (FR)**
• **Reynaud, Sébastien**
**75012, Paris (FR)**

(74) Mandataire: **Collet, Alain**
**Marks & Clerk France**
**Conseils en Propriété Industrielle**
**Immeuble Visium**
**22, Avenue Aristide Briand**
**94117 Arcueil Cedex (FR)**

(56) Documents cités:
**US-A1- 2005 273 257**

• **Ingemar Nygren: "Terrain navigation for underwater vehicles", Doctoral Thesis in Signal Processing , 14 décembre 2005 (2005-12-14), pages COVERPG.-260, XP002613004, Stockholm ISSN: 1103-8039 Extrait de l'Internet: URL:http://kth.diva-portal.org/smash/get/d iva2:14353/FULLTEXT01 [extrait le 2010-12-07]**
• **David Gaeuman ET AL: "A Map Overlay Error Model Based on Boundary Geometry", Geographical Analysis, vol. 37, no. 3, 1 July 2005 (2005-07-01), pages 350-369, XP055208129, ISSN: 0016-7363, DOI: 10.1111/j.1538-4632.2005.00585.x**
• **NICLAS BERGMAN: 'Recursive Bayesian Estimation Navigation and Tracking Applications', [en ligne] 01 Janvier 1999, XP055208147 Extrait de l'Internet: <URL:http://down.cenet.org.cn/upfile/28/200 51117121144185.pdf>**

## Description

La présente invention concerne un procédé d'élaboration d'une phase de navigation d'un porteur dans un système de navigation impliquant une corrélation de terrain. Elle s'applique notamment au domaine de la navigation de porteurs, et plus particulièrement à des systèmes de navigation opérant notamment suivant des procédés de corrélation de terrain, la navigation par corrélation de terrain étant désignée par le sigle NCT.

La navigation par corrélation de terrain ou NCT, constitue un moyen particulier de navigation, pouvant s'appliquer à une grande diversité de véhicules porteurs, par exemple des aéronefs, des sous-marins, des missiles autoportés, etc.

Il existe trois moyens principaux connus visant à répondre aux besoins de navigation de porteurs. Le premier principal moyen connu comprend les techniques de navigation inertielle. Le deuxième principal moyen connu comprend les techniques de radionavigation. Le troisième principal moyen connu comprend les techniques de navigation par corrélation de terrain.

La navigation inertielle consiste à exploiter des informations fournies par des centrales inertielles. Le fonctionnement d'une centrale inertielle se fonde sur le principe de relativité d'Einstein-Galilée, postulant qu'il est possible, sans l'aide de signaux extérieurs à un porteur, de mesurer d'une part la vitesse de rotation du porteur par rapport à un référentiel inertiel, par exemple défini par un repère géocentrique associé à des étoiles fixes, et d'autre part la force spécifique appliquée au porteur : typiquement son accélération dans le référentiel inertiel, diminuée de l'accélération de la pesanteur. D'une manière typique, un système de navigation inertielle, communément désigné INS selon le sigle correspondant à la terminologie anglaise "Inertial Navigation System", est un dispositif permettant de mesurer ces deux grandeurs au moyen de capteurs tels que des gyromètres et des accéléromètres, communément au nombre de trois de chaque type, disposés selon trois axes orthogonaux, l'ensemble de ces capteurs formant une unité de mesure inertielle, communément désignée "IMU" selon le sigle correspondant à la terminologie anglaise "Inertial Measurement Unit". L'intégration temporelle des données d'accélération, et la projection dans le repère de navigation à partir des données de vitesse de rotation, permettent la détermination de la position et de la vitesse du porteur par rapport à la terre, en connaissance d'un état initial de ces données. Cependant, un inconvénient lié à l'intégration temporelle est que l'erreur associée aux données ainsi déterminées, est une fonction croissante du temps. Cette erreur croît plus que linéairement, typiquement de façon exponentielle, la variation de l'erreur étant communément désignée dérive de la centrale inertielle. Il est ainsi nécessaire, pour des applications nécessitant une navigation de précision, d'hybrider les mesures inertielles avec d'autres mesures de position et/ou de vitesse et/ou d'attitude du porteur fournies par des capteurs complémentaires, tels que des baroaltimètres, des odomètres, des sondes de Pitot, etc., dans le but de diminuer la dérive de la centrale inertielle. De tels capteurs fournissent des informations sur l'état cinématique du porteur sans nécessiter aucun accès à des signaux extérieurs ou des cartes embarquées, et sont communément désignés capteurs de bas niveau.

La radionavigation consiste à exploiter les signaux issus de balises émettrices de signaux radioélectriques, pour en tirer une information de positionnement du porteur vis-à-vis de ces balises. Une technique de radionavigation largement utilisée est la technique de géo-positionnement par satellite, communément désignée selon le sigle GNSS correspondant à la terminologie anglaise "Global Navigation Satellite System", et dont un des représentants est la technique de GPS, correspondant à la terminologie anglaise "Global Positioning System". Un des inconvénients liés aux techniques de radionavigation, est lié au fait que la réception des signaux en provenance des balises n'est pas garantie en tout lieu à tout moment, et peut notamment être affectée par l'environnement géophysique du porteur, ainsi que par le bruit électromagnétique environnant, des techniques de brouillage pouvant notamment mettre en cause le fonctionnement d'un dispositif de radionavigation. En outre, les balises émettrices étant maintenues par des opérateurs, l'intégrité des données de radionavigation qui en sont issues est fortement dépendante de la bonne volonté de ces derniers. La radionavigation, et notamment le géo-positionnement par satellite et la navigation inertielle sont par exemple des techniques de navigation complémentaires, et une hybridation des deux techniques peut s'avérer très performante en pratique. La navigation inertielle constitue en effet un très bon estimateur local de positionnement dérivant à long terme, et le géo-positionnement par satellite étant peu fiable sur une courte durée en raison des inconvénients précités, mais ne présentant pas de dérive. Cependant, dans les applications les plus critiques, et notamment pour les applications militaires, il est essentiel de recourir à d'autres sources d'information de position et/ou de vitesse et/ou d'attitude du porteur pour assurer une hybridation avec une technique de navigation inertielle. Il est notamment souhaitable que ces sources alternatives permettent des mesures de position et/ou de vitesse et/ou d'attitude du porteur qui soient autonomes, non sujettes au brouillage, et discrètes.

La navigation par corrélation de terrain ou NCT consiste à exploiter des mesures de données géophysiques délivrées par un capteur adéquat, à des données de référence propres à un terrain de couverture de la navigation. Les capteurs sont ainsi utilisés conjointement à une carte de référence du terrain, également désignée carte embarquée. Ces capteurs permettent la lecture d'une donnée caractéristique sur le terrain, et la navigation par corrélation de terrain consiste à comparer ces valeurs avec les données de la carte embarquée, la carte embarquée étant un relevé a priori des valeurs de ces données sur la zone de navigation considérée, obtenu par des moyens adéquats, et désigné pour la suite filière de production des données. La navigation par corrélation de terrain est particulièrement adaptée pour une hybridation avec une technique de navigation inertielle, et permet de pallier les insuffisances de la radionavigation. Bien sûr, il est possible, pour des performances optimales, de recourir à un système de navigation permettant une hybridation des trois techniques de navigation précitées.

D'une manière générale, tout système de navigation impliquant une corrélation de terrain comprend ainsi une pluralité de capteurs embarqués compris dans la centrale inertielle, ainsi que le capteur de terrain, une carte embarquée représentant la meilleure connaissance possible sur la réalité des données géophysiques que le capteur embarqué doit mesurer, et un filtre de navigation. Le filtre de navigation permet d'arbitrer en temps réel, entre les informations fournies par la centrale inertielle et celles fournies par la comparaison entre les mesures fournies par le capteur de terrain et la carte embarquée. L'arbitrage réalisé par le filtre en fonction de sa connaissance a priori des erreurs sur les mesures fournies. Cette connaissance est regroupée dans des modèles d'erreur. Les modèles d'erreur sont relatifs à la centrale inertielle, les erreurs de la centrale inertielle étant plus ou moins grandes selon la qualité de l'équipement ; les modèles d'erreur concernent également le capteur de terrain, ainsi que la carte embarquée, les erreurs de cette dernière étant plus ou moins grande selon la qualité de la filière de production des données. Les modèles d'erreur des équipements proviennent des informations fournies par les fabricants, et / ou bien de mesures effectuées via des études spécifiques. Les modèles d'erreur des cartes embarquées sont fournis par les producteurs de données.

Un aspect essentiel de la navigation est le caractère stochastique des phénomènes considérés. En effet, les capteurs produisent des erreurs suivant des modèles stochastiques, et la connaissance des données géophysiques étant peu maîtrisée, la résolution du problème de la navigation par un filtrage rend les performances de navigation intrinsèquement stochastiques. Ainsi, le filtre utilisé dans un système de navigation peut être considéré comme un estimateur d'un processus stochastique, c'est-à-dire comme le dispositif qui donne à tout instant l'état dynamique du porteur modélisé comme une variable aléatoire.

Un premier exemple de système de navigation impliquant une corrélation de terrain est fondé sur la technique de navigation altimétrique. Cette technique consiste à faire naviguer un porteur aérien à l'aide d'une centrale inertielle, d'un capteur de terrain de type radioaltimètre ou scanneur laser multi-faisceau, mesurant la distance du porteur au terrain dans une ou plusieurs direction(s) donnée(s), et d'une carte embarquée de type Modèle Numérique de Terrain ou MNT, recensant les altitudes de points du sol sur une grille régulière géolocalisée.

Un deuxième exemple de système de navigation impliquant une corrélation de terrain est fondé sur la technique de navigation bathymétrique. Cette technique consiste à faire naviguer un porteur marin ou sous-marin à l'aide d'une centrale inertielle, d'un capteur de terrain de type sondeur bathymétrique mono-faisceau ou multi-faisceau, mesurant la distance du porteur au fond de la mer dans une ou plusieurs direction(s) donnée(s), et d'une carte embarquée de type carte bathymétrique, recensant les altitudes de points du fond marin sur une grille régulière géolocalisée.

Un troisième exemple de système de navigation impliquant une corrélation de terrain est fondé sur la technique de navigation gravimétrique. Cette technique consiste à faire naviguer un porteur aérien, marin ou sous-marin à l'aide d'une centrale inertielle, d'un capteur de terrain de type gravimètre ou accéléromètre, mesurant le champ de pesanteur local ou son anomalie, et d'une carte embarquée de type carte d'anomalie gravimétrique, recensant les valeurs de l'anomalie du champ de pesanteur en des points du globe sur une grille régulière normalisée.

Un quatrième exemple de système de navigation impliquant une corrélation de terrain est fondé sur la technique de navigation par vision. Cette technique consiste à faire naviguer un porteur aérien à l'aide d'une centrale inertielle, d'un capteur de terrain de type caméra embarquée qui délivre des images du paysage survolé à une fréquence donnée dans le domaine visible ou infrarouge, et de deux cartes embarquées, une carte embarquée de type Orthoimage géolocalisée, c'est-à-dire une image ré-échantillonnée de telle sorte qu'ont été supprimés les effets du relief, c'est-à-dire pour laquelle l'échelle est la même en tous les points, ainsi qu'une carte embarquée de type MNT.

La thèse intitulée « Terrain navigation for underwater vehicles » de Ingemar Nygren, XP002613004, décrit notamment une carte embarquée modifiée en retranchant une erreur systématique éventuelle.

La demande de brevet US 2005/273257, divulgue un système de navigation utilisant un facteur de qualité calculé sur un modèle numérique de terrain qui sert à pondérer le filtre de navigation.

Le document de Nicolas Bergman, « Recursive Bayesian Estimation Navigation and Tracking », XP055208147, traite de l'estimation récursive bayésienne appliquée dans le domaine de la navigation et du suivi.

Dans le cadre de systèmes de navigation impliquant une corrélation de terrain, les concepteurs sont notamment confrontés à un certain nombre de problèmes techniques énoncés ci-dessous :

- il est nécessaire de définir un système de navigation permettant d'atteindre une qualité souhaitée de navigation selon un ensemble de critères déterminés, par exemple selon un critère de moindre coût ;
- il est nécessaire de déterminer des modèles d'erreur les plus fidèles possible pour la centrale inertielle, le capteur de terrain et la carte embarquée ;
- il est nécessaire de définir les missions d'un porteur, notamment en terme de trajectoire de consigne, lors d'une phase de préparation de mission, afin de déterminer une trajectoire optimale le long de laquelle la qualité du signal délivré par le capteur de terrain soit maximale, la trajectoire optimale devant également être définie en fonction d'autres critères de performance de la mission du porteur et de contraintes opérationnelles liées au théâtre de la mission. La phase de préparation de mission doit par exemple se fonder sur un critère de navigabilité qui soit pertinent, c'est-à-dire représentatif de la richesse du signal délivré par le capteur de terrain ;

- il est nécessaire de définir un filtre de navigation performant, robuste et capable de prendre en considération au mieux tous les modèles d'erreur relatifs aux différents composants du système, c'est-à-dire l'erreur de la centrale inertielle, du capteur de terrain et de la carte embarquée.

La présente invention a principalement pour objet de résoudre le problème technique précité, relatif à la phase de préparation d'une mission de navigation. Dans des procédés de préparation de missions connus de l'état de la technique, seul le critère de dureté, présenté ci-après, est utilisé. Le critère de dureté présente l'inconvénient de n'être approprié que pour des systèmes de navigation fondés sur des techniques d'altimétrie ou de bathymétrie. En outre, le critère de dureté ne prend pas en compte, selon les procédés connus de l'état de la technique, ni la qualité du capteur de terrain employé, ni les erreurs de la carte embarquée. Les hypothèses retenues sont généralement un capteur de terrain supposé parfait et une carte embarquée supposée parfaite, ces hypothèses ayant un impact négatif sur la qualité des résultats obtenus par les procédés de calcul utilisés.

Un but de la présente invention est de pallier au moins les inconvénients précités, en proposant un procédé se fondant sur un critère de navigabilité, pouvant s'appliquer de manière générique à tous les système de navigation impliquant une corrélation de terrain, quelles que soient les techniques mises en oeuvre.

Un avantage de la présente invention est que le procédé proposé peut permettre la prise en considération de critères additionnels tels que la qualité des capteurs de terrain et des cartes embarquées.

A cet effet, la présente invention a pour objet un procédé d'élaboration d'une phase de navigation d'un porteur dans un système de navigation impliquant une corrélation de terrain, modélisé par un système d'équations en temps discret suivant une relation du type : $\begin{cases} X_{t+1} = F_t X_t + V_t \\ Y_t = h_t(X_t) + W_t \end{cases}$, où le terme $X_t$, comprend au moins l'état cinématique du système, l'état initial $X_0$ contenant au moins l'erreur de la centrale inertielle initiale modélisée comme une variable aléatoire gaussienne centrée de covariance $P_0$ ; la matrice $F_t$ de l'évolution linéaire de l'état contient au moins le modèle de la centrale inertielle utilisé; $Y=(Y_t,t\geq 0)$ le vecteur des observations est formé au moins des mesures du capteur de terrain ; $V_t$ et $W_t$ sont des bruits blancs gaussiens indépendants centrés de covariances respectives définies positives $Q_t$ et $R_t$, indépendants entre eux et indépendants de l'état initial $X_0$ ; le terme $h_t$ représente la combinaison du modèle des capteurs de terrain et des cartes embarquées, le système de navigation comprenant au moins :

• un bloc de navigation comprenant une centrale inertielle et au moins un capteur de terrain accompagnés de leurs modèles d'erreur,
• au moins une carte embarquée accompagnée de son modèle d'erreur,

le procédé élaborant une carte de navigabilité déterminant pour une pluralité de points d'intérêt de la carte embarquée, des scores de navigabilité, le procédé d'élaboration étant caractérisé en ce que le score de navigabilité en un point X de la carte embarquée est égal au carré de la norme du gradient de terrain pondéré par un coefficient de pondération $\alpha(X)$ prenant en compte des qualités relatives du terrain, soit $\alpha(X).\|\nabla_x h_{terrain}(X)\|^2$, le coefficient de pondération $\alpha(X)$ est égal à l'inverse de la variance scalaire du bruit en le point X, soit VAR(X) le gradient de terrain étant défini par le gradient de la fonction $h=h_{terrain}$.

Dans un mode de réalisation de l'invention, le modèle d'erreur de la carte embarquée peut être un modèle nul.

Dans un mode de réalisation de l'invention, VAR(X) peut être égal au carré de l'écart type du bruit blanc gaussien correspondant au modèle d'erreur de carte en chaque point X du terrain, le modèle de carte étant alors assimilé à un modèle de bruit blanc gaussien.

La présente invention a également pour objet un système d'élaboration d'une phase de navigation comprenant un module de calcul de carte de navigabilité, recevant en une première entrée les données issues d'un modèle d'erreur de la carte embarquée et de la carte embarquée, caractérisé en ce que le module de calcul de la carte de navigabilité met en oeuvre un procédé d'élaboration d'une phase de navigation selon l'un quelconque des modes de réalisation décrits, et restitue une carte de navigabilité à destination d'un module d'optimisation de la trajectoire du porteur.

D'autres caractéristiques et avantages de l'invention apparaîtront à la lecture de la description, donnée à titre d'exemple, faite en regard des dessins annexés qui représentent :

- la figure 1, un schéma illustrant de manière synoptique la structure d'un système de navigation impliquant une corrélation de terrain ;
- la figure 2, un schéma illustrant de manière synoptique, un système d'élaboration d'une phase de navigation, mettant en oeuvre un procédé d'élaboration selon un des modes de réalisation de l'invention.

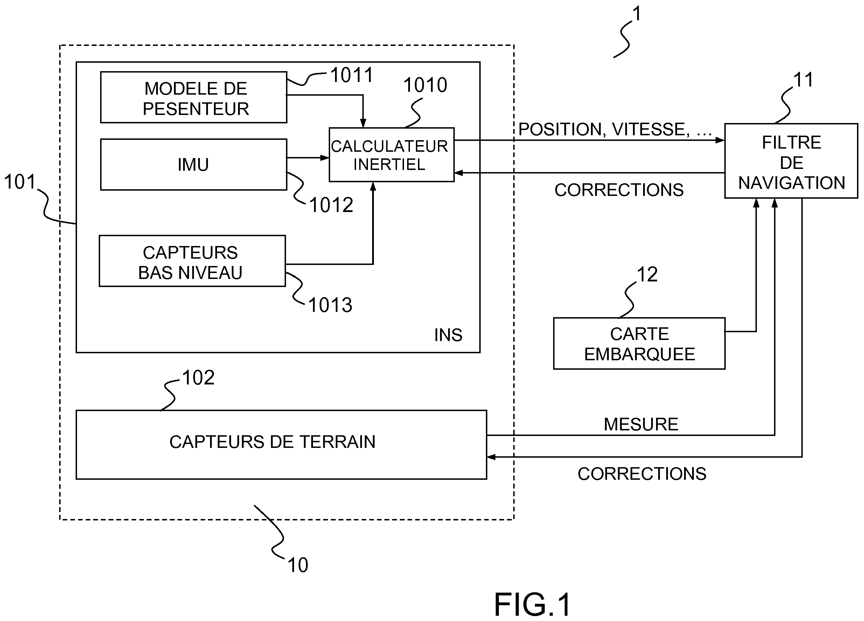

La figure 1 présente un schéma illustrant de manière synoptique la structure d'un système de navigation impliquant une corrélation de terrain. D'une manière typique, un système de navigation 1 comprend un bloc de navigation 10, un filtre de navigation 11 et une carte embarquée 12.

Le bloc de navigation 10 peut comprendre une centrale inertielle 101 et un ou une pluralité de capteurs de terrain 102. La centrale inertielle 101 peut notamment comprendre un calculateur inertiel 1010, recevant des données en provenance d'un modèle de pesanteur 1011, d'une IMU 1012 et d'un ou une pluralité de capteurs de bas niveau 1013.

Le filtre de navigation 11 reçoit des données de position, de vitesse et d'attitude du porteur, en provenance du calculateur inertiel 1010. Le filtre de navigation 11 reçoit des mesures de données géophysiques en provenance des capteurs de terrain 102. Egalement, le filtre de navigation 11 accède aux données contenues dans la carte embarquée 12. Le filtre de navigation 11 peut être mis en oeuvre dans des dispositifs de calcul adéquats, et restitue des estimations de l'état cinématique du porteur. Le filtre de navigation 11 est également apte à appliquer des corrections aux paramètres de configuration du calculateur inertiel 1010 et des capteurs de terrain 102. D'une manière typique, le filtre de navigation 11 peut par exemple corriger des biais des capteurs de terrain 102, ou encore des dérives de la centrale inertielle 101.

La carte embarquée 12 peut par exemple être formée par un ensemble de données stockées dans une mémoire.

Ainsi que cela est évoqué précédemment, les procédés de préparation de missions connus de l'état de la technique impliquent un critère de navigabilité. Pour la suite, il est entendu par le terme "navigabilité", la seule contribution du terrain à la bonne navigation. Le critère de navigabilité habituellement employé est communément désigné dureté ou facteur de dureté. Le facteur de dureté est donné par la relation suivante :

$$f = \sqrt{\frac{\sigma_T \sigma_P}{2\pi}} \qquad (1),$$

où

$\sigma_T$ désigne l'écart-type de la variation d'altitude, et $\sigma_P$ désigne l'écart-type de la variation des pentes du terrain.

Il est également possible de définir des critères de dureté abrégés, ne prenant par exemple comme par exemple le critère réduit à $\sigma_T$ et celui réduit à. $\sigma_P$

Le terrain est alors d'autant plus favorable au recalage altimétrique que le facteur de dureté f est élevé. Il est possible de classer le terrain en plusieurs catégories, selon la valeur du facteur de dureté f, par exemple de classer le terrain dans la catégorie "plat" si le facteur de dureté f est compris entre 0 et 0,35, dans la catégorie "vallonné" si f est compris entre 0,35 et 0,75, dans la catégorie "accidenté" si f est compris entre 0,75 et 2, dans la catégorie "très accidenté" si f est compris entre 2 et 3,6, et dans la catégorie "extrêmement accidenté" si f est supérieur à 3,6.

Il est possible d'élaborer des cartes de navigabilité, ayant pour but de fournir une représentation géo-référencée, c'est-à-dire dans laquelle chaque point peut être désigné par des coordonnées géographiques, mettant en avant les zones pour lesquelles le terrain est plus ou moins favorable à la corrélation de terrain. Selon de telles représentations, chaque point ou zone du terrain est associée à un score de navigabilité mesurant son aptitude à fournir de l'information de qualité au procédé de corrélation de terrain. Différents algorithmes, en eux-mêmes connus de l'état de la technique, permettent alors d'exploiter les données des cartes de navigabilité, en plus des critères et contraintes habituellement pris en compte pour l'élaboration de missions, afin de déterminer des trajectoires optimales du porteur dans le but d'atteindre des critères de performances du système de navigation.

Dans un système de NCT, les éléments contributeurs à une bonne navigation sont exclusivement :

- l'information contenue dans le terrain survolé, ou plus précisément l'information à laquelle le porteur accède,
- la capacité du capteur de terrain à remonter l'information de terrain,
- la précision de la centrale inertielle embarquée et des capteurs de bas niveau associés,
- le filtre de navigation.

Le critère de dureté présenté précédemment a pour avantage de ne faire intervenir que les caractéristiques du terrain, et répond donc à la définition de la navigabilité fixée ci-dessus ; cependant il présente notamment les inconvénients suivants :

- il n'est pas naturellement généralisable à d'autres techniques de NCT,
- il ne possède pas de lien simple avec les calculs de performance d'un filtre de navigation,

- il ne peut pas prendre en compte les erreurs de carte embarquée,
- même pour des applications mettant en oeuvre la technique altimétrique, le critère de dureté ne reflète pas exactement la qualité de navigation que l'on peut attendre d'un terrain.

La présente invention propose la mise en oeuvre d'un critère de navigabilité pertinent, plus proche du mécanisme du filtre de navigation utilisé tout en en étant indépendant, et parfaitement généralisable à tous les types de navigation par corrélation de terrain. Le critère de navigabilité est dans le cadre de la présente invention, fondé sur la borne de Cramer-Rao.

Il est rappelé ici quelques éléments essentiels relatifs à la borne de Cramer-Rao : la borne de Cramer-Rao permet d'obtenir un minorant de la précision avec laquelle il est possible de connaître les variables estimées, par exemple la position, la vitesse et l'attitude d'un porteur à partir de mesures des caractéristiques géophysiques de son environnement effectuées par le capteur de terrain, de la carte embarquée et de la centrale inertielle. Ainsi, la borne de Cramer-Rao dépend des paramètres de la centrale inertielle, des capteurs de terrain, de la qualité des cartes embarquées ainsi que de l'environnement vu par ces capteurs durant la trajectoire suivie par le porteur. En adoptant l'écriture par modèle d'état du problème en temps discret indexé par t, l'estimation du vecteur d'état $X_t$ comprenant au moins les erreurs inertielles en position, vitesse et attitude, peut se formuler suivant la relation suivante :

$$\begin{cases} X_{t+1} = F_t X_t + V_t \\ Y_t = h_t(X_t) + W_t \end{cases} \tag{2},$$

où

le terme $X_t$, comprend au moins l'état cinématique du système, c'est-à-dire en particulier les erreurs de la centrale inertielle en position, vitesse et attitude, $X_0$ contenant au moins l'erreur de la centrale inertielle initiale modélisée comme une variable aléatoire gaussienne centrée de covariance $P_0$ ; la matrice $F_t$ de l'évolution linéaire de l'état contient au moins le modèle de la centrale inertielle utilisé; $Y=(Y_t,t\geq 0)$ le vecteur des observations est formé au moins des mesures du capteur de terrain de la NCT ; les termes $V_t$ (qui représente les bruits de mesures liés aux capteurs de la centrale inertielle) et $W_t$ (contenant entre autre les bruits liés au capteur de terrain et ainsi que les bruits liés à l'erreur de la carte embarquée) sont des bruits blancs gaussiens indépendants centrés de covariances respectives définies positives $Q_t$ et $R_t$. Les deux bruits sont indépendants entre eux et indépendants de $X_0$ ; le terme $h_t$ représente la combinaison du modèle des capteurs et des cartes embarquées disponibles utilisées.

L'expression récursive servant au calcul de la borne de Cramer-Rao peut alors s'écrire suivant la relation suivante :

$$J_{t+1}(X_{t+1}) = E\left[\nabla_{X_{t+1}} h_{t+1}^T(X_{tk+1})\right] R_{t+1}^{-1} \left[\nabla_{X_{t+1}} h_{t+1}^T(X_{tk+1})\right]^T + \left(Q_t + F_t(X_t) J_t^{-1} F_t^T(X_t)\right)^{-1} \tag{3},$$

où :

$J_t$ est la matrice d'information de Fisher associée au problème d'estimation considéré, c'est-à-dire l'inverse de la borne de Cramer-Rao.

Les termes apparaissant dans la relation (3) peuvent se scinder en deux groupes distincts :

- le premier terme $E_X\left\{\left(\nabla_{X_{t+1}} h_{t+1}\right)^T R_{t+1}^{-1} \left(\nabla_{X_{t+1}} h_{t+1}\right)\right\}$ correspond à un apport d'information lié au gradient du terrain vu par la fonction d'observation h et pondéré par les paramètres d'un bruit lié à la mesure du capteur de terrain et à l'erreur de terrain via $R_t$ ;

- le second terme $\left(Q_t + F_t \cdot J_t^{-1} \cdot F_t^T\right)^{-1}$, correspond au cumul d'information avant la nouvelle observation compte tenu des informations passées, de la dynamique de l'état et de la perte d'information due au bruit d'état, c'est-à-dire dans le cas de la NCT à une perte d'information liée à la dynamique de l'état, soit encore l'imprécision de la centrale inertielle.

Il est proposé de déterminer un critère de navigabilité reflétant la seule contribution du terrain à la quantité d'information disponible à un instant t. Le premier terme précité représentant un apport d'information sur le terrain à l'instant t, constitue une base appropriée pour la détermination du critère de navigabilité. Cependant, ce terme montre un couplage entre le terrain et le modèle de capteur terrain utilisé.

Afin de s'abstraire de ce couplage entre le modèle d'observation h et le terrain, dans le but de définir un critère de navigabilité uniquement fondé sur l'information du terrain, il est proposé de réduire la contribution du capteur à la simple lecture de la valeur du terrain au point courant, en posant h=h$_{terrain}$. En interprétant ce terme de manière uniquement locale au point considéré, il est possible d'omettre l'espérance en X. Afin de permettre un calcul direct, on utilise par ailleurs la carte embarquée comme unique réalisation du terrain vrai. Le terme R peut alors servir à caractériser l'erreur de carte :

- le terme $\nabla_X h_{terrain}.(X) \cdot R_X^{-1} \cdot \nabla_X h_{terrain}(X)^T$ peut ainsi être interprété comme la quantité d'information apportée par le terrain au point X ;
- le terme lié à R dépendant de X (le point de terrain) peut être considéré comme un terme de pondération lié à la qualité relative de la connaissance des différentes zones du terrain.

Le critère de navigabilité proposé peut être exprimé en fonction de la norme au carré du gradient de terrain, soit :

$$\left\| \nabla_X h_{terrain}(X) \right\|^2 \qquad\qquad (4).$$

Ainsi, le critère de navigabilité exprime la capacité du terrain à fournir de l'information localement à un filtre de navigation.

Avantageusement, le critère de navigabilité peut être pondéré par l'erreur de carte. Dans ce cas, le score de navigabilité d'un point du terrain peut être défini en tout point X par :

$$\alpha(X) \left\| \nabla_X h_{terrain}(X) \right\|^2 \qquad\qquad (5),$$

où

$\alpha(X)$ est un coefficient de pondération permettant la prise en compte des qualités relatives du terrain et $\|\nabla_X h_{terrain}(X)\|^2$ la norme du gradient au carré du terrain lui-même au point X.

Dans le cas particulier d'une carte embarquée munie d'un modèle d'erreur du type bruit blanc gaussien, la matrice R dans la relation (3) ci-dessus se réduit à la matrice scalaire de la covariance du bruit blanc au point X, VAR(X).Id, Id représentant la matrice identité, et VAR(X) représente la variance scalaire du bruit au point X. Il est alors possible de calculer explicitement la valeur du coefficient de pondération :

$$\alpha(X) = \frac{1}{VAR(X)} \qquad\qquad (6).$$

Dans les autres cas, il n'est pas possible d'établir simplement une formule analytique pour $\alpha(X)$. Néanmoins, pour tout terrain, il est possible d'établir un champ de pondération du terme $\|\nabla_X h_{terrain}(X)\|^2$ en fonction des qualités relatives des différentes zones de terrain. Le critère de navigabilité ainsi obtenu mesure également une capacité du terrain à fournir de l'information pour la navigation.

Une carte de navigabilité composée des scores de navigabilité peut alors être utilisée dans toute méthode d'optimisation de trajectoire sous contraintes opérationnelles, de telles méthodes étant en elles-mêmes connues de l'état de la technique. Le critère de navigabilité ainsi défini peut être appliqué quelle que soit la technique de NCT envisagée dans le système de navigation. Le calcul des scores de navigabilité est directement dérivé des performances attendues de la NCT, et partant plus fidèles aux performances des filtres de navigation de NCT.

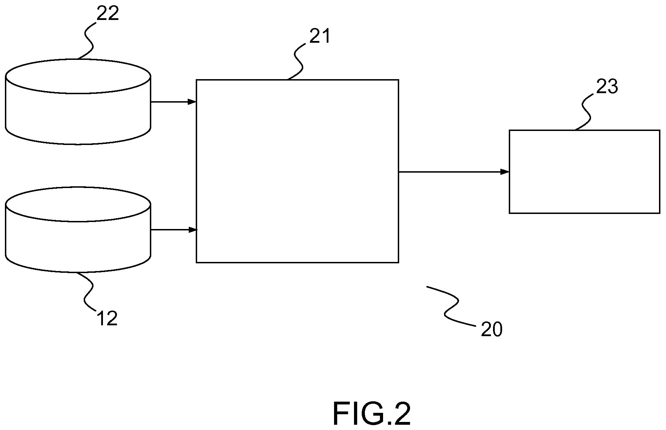

La figure 2 présente un schéma illustrant de manière synoptique, un système d'élaboration d'une phase de navigation, mettant en oeuvre un procédé d'élaboration selon un des modes de réalisation de l'invention décrits précédemment.

Un système d'élaboration d'une phase de navigation 20 peut comprendre un module de calcul de la carte de navigabilité 21, recevant en une première entrée les données issues d'un modèle d'erreur de la carte embarquée 22 et de la carte embarquée 12. Le module de calcul de la carte de navigabilité 21 met en oeuvre le calcul des scores de navigabilité pour tous les points de la carte embarquée 12, suivant les relations (4) à (6) ci-dessus selon l'un des modes de réalisation décrits, et restitue en sortie la carte de navigabilité, qui peut être exploitée sous la forme de données d'entrée, par un module d'optimisation de trajectoire 23, en lui-même connu de l'état de la technique.

Le système d'élaboration d'une phase de navigation 20 peut par exemple être mis en oeuvre dans un calculateur dédié, ou bien de manière logicielle via un programme d'ordinateur.

**Revendications**

1. Procédé d'élaboration d'une phase de navigation d'un porteur dans un système de navigation impliquant une corrélation de terrain, modélisé par un système d'équations en temps discret suivant une relation en temps discret du type : $\begin{cases} X_{t+1} = F_t X_t + V_t \\ Y_t = h_t(X_t) + W_t \end{cases}$ , où le terme $X_t$, comprend au moins l'état cinématique du système, l'état initial $X_0$ contenant au moins l'erreur de la centrale inertielle initiale modélisée comme une variable aléatoire gaussienne centrée de covariance $P_0$ ; la matrice $F_t$ de l'évolution linéaire de l'état contient au moins le modèle de la centrale inertielle utilisé; $Y=(Y_t, t \geq 0)$ le vecteur des observations est formé au moins des mesures du capteur de terrain (102) ; $V_t$ et $W_t$ sont des bruits blancs gaussiens indépendants centrés de covariances respectives définies positives $Q_t$ et $R_t$, indépendants entre eux et indépendants de l'état initial $X_0$ ; le terme $h_t$ représente la combinaison du modèle des capteurs de terrain (102) et des cartes embarquées (12), le système de navigation comprenant au moins :

   • un bloc de navigation (10) comprenant une centrale inertielle (101) et au moins un capteur de terrain (102) accompagnés de leurs modèles d'erreur,
   • au moins une carte embarquée (12),

   le procédé élaborant une carte de navigabilité déterminant pour une pluralité de points d'intérêt de la carte embarquée (12), des scores de navigabilité, le procédé d'élaboration étant **caractérisé en ce qu'**il prend en considération un modèle d'erreur de la carte embarquée (12), le score de navigabilité en un point X de la carte embarquée (12) est égal au carré de la norme du gradient de terrain pondéré par un coefficient de pondération $\alpha(X)$ prenant en compte des qualités relatives du terrain, soit $\alpha(X).\|\nabla_x h_{terrain}(X)\|^2$, le coefficient de pondération $\alpha(X)$ est égal à l'inverse de la variance scalaire du bruit en le point X, soit VAR(X) et le gradient de terrain étant défini par le gradient de la fonction $h=h_{terrain}$.

2. Procédé d'élaboration d'une phase de navigation selon la revendication 1, **caractérisé en ce que** le modèle d'erreur de la carte embarquée est un modèle nul.

3. Procédé d'élaboration d'une phase de navigation selon la revendication 1, **caractérisé en ce que** VAR(X) est égal au carré de l'écart type du bruit blanc gaussien correspondant au modèle d'erreur de carte en chaque point X du terrain, le modèle de carte étant alors assimilé à un modèle de bruit blanc gaussien.

4. Système d'élaboration d'une phase de navigation (20) comprenant un module de calcul de carte de navigabilité (21), recevant en une première entrée les données issues d'un modèle d'erreur de la carte embarquée (22) et de la carte embarquée (12), **caractérisé en ce que** le module de calcul de la carte de navigabilité (21) met en oeuvre un procédé d'élaboration d'une phase de navigation selon l'une quelconque des revendications précédentes, et restitue une carte de navigabilité à destination d'un module d'optimisation de la trajectoire du porteur (23).

**Patentansprüche**

1. Verfahren zur Ausarbeitung einer Navigationsphase eines Trägers in einem Navigationssystem, das eine Geländekorrelation impliziert, modeliert durch ein zeitdiskretes Gleichungssystem gemäß einer zeitdiskreten Relation des Typs: $\begin{cases} X_{t+1} = F_t X_t + V_t \\ Y_t = h_t(X_t) + W_t \end{cases}$

   wobei der Ausdruck $X_t$ mindestens den kinematischen Zustand des Systems umfasst, wobei der ursprüngliche Zustand $X_0$ mindestens den Fehler der anfänglichen modelierten Trägheitszentrale als zufällige zentrierte gaußsche Variable mit der Kovarianz $P_0$ enthält; die Matrix $F_t$ der linearen Entwicklung des Zustands mindestens das Modell der verwendeten Trägheitszentrale enthält; $Y=(Y_t, t \geq 0)$ der Vektor der Beobachtungen mindestens aus den Messungen des Geländesensors (102) gebildet wird; $V_t$ und $W_t$ jeweils unabhängiges gaußsches zentriertes weißes Rauschen entsprechender definierter positiver Kovarianzen $Q_t$ und $R_t$, unabhängig voneinander und unabhängig vom ursprünglichen Zustand $X_0$, sind; der Ausdruck $h_t$ die Kombination des Modells der Geländesensoren (102) und der eingespielten Karten (12) darstellt, wobei das Navigationssystem mindestens Folgendes umfasst:

• einen Navigationsblock (10), der eine Trägheitszentrale (101) und mindestens einen Geländeerfassungssensor (102) zusammen mit ihren Fehlermodellen umfasst,
• mindestens eine eingespielte Karte (12),

wobei das Verfahren eine Navigationskarte ausarbeitet, die für eine Mehrzahl der Sehenswürdigkeiten der eingespielten Karte (12) Navigationswerte bestimmt, wobei das Ermittlungsverfahren **dadurch gekennzeichnet ist, dass** es ein Fehlermodell der eingespielten Karte (12) berücksichtigt, der Navigationswert an einem Punkt X der eingespielten Karte (12) dem Quadrat des durch einen Gewichtungskoeffizienten $\alpha(X)$ gewichteten Ge-ländegradientstandards entspricht, das die entsprechenden Geländequalitäten, sprich $\alpha(X).\|\nabla x h_{Gelände}(X)\|^2$, berücksichtigt, der Gewichtungskoeffizient $\alpha(X)$ dem Kehrwert der Skalarvarianz des Rauschens am Punkt X, sprich VAR(X), entspricht und der Geländegradient durch den Gradienten der Funktion $h=h_{Gelände}$ definiert ist.

2. Verfahren zur Ausarbeitung einer Navigationsphase nach Anspruch 1, **dadurch gekennzeichnet, dass** das Fehlermodell der eingespielten Karte einem Nullmodell entspricht.

3. Verfahren zur Ausarbeitung einer Navigationsphase nach Anspruch 1, **dadurch gekennzeichnet, dass** VAR(X) gleich dem Quadrat der Standardabweichung des gaußschen weißen Rauschens ist, das dem Fehlermodell der Karte an jedem Punkt X des Geländes entspricht, wobei das Kartenmodell dann einem Modell gaußschen weißen Rauschens gleichgestellt wird.

4. System zur Ausarbeitung einer Navigationsphase (20), das ein Navigationskarten-Berechnungsmodul (21) umfasst und das in einer ersten Eingabe die Daten empfängt, die von einem Fehlermodell der eingespielten Karte (22) und der eingespielten Karte (12) stammen, **dadurch gekennzeichnet, dass** das Navigationskarten-Berechnungsmodul (21) ein Verfahren zur Ausarbeitung einer Navigationsphase nach einem der vorangegangenen Ansprüche umsetzt und eine Navigationskarte für ein Modul zur Optimierung der Flugbahn des Trägers (23) wiedergibt.

**Claims**

1. Method for calculating a navigation phase for a carrier in a navigation system involving terrain correlation, modeled by a system of equations in discrete time in accordance with a discrete-time relation of the type:

$$\begin{cases} X_{t+1} = F_t X_t + V_t \\ Y_t = h_t(X_t) + W_t \end{cases}$$

, where the term $X_t$, comprises at least the kinematic state of the system, the initial state $X_0$ containing at least the error of the initial inertial platform modeled as a centered Gaussian random variable with covariance $P_0$; the matrix $F_t$ of the linear evolution of the state contains at least the inertial platform model used; $Y=(Y_t, t \geq 0)$ the observations vector is formed at least of the measurements of the terrain sensor (102); $V_t$ and $W_t$ are centered independent Gaussian white noise with respective positive definite covariances $Q_t$ and $R_t$, said noise being mutually independent and independent of the initial state $X_0$; the term $h_t$ represents the combination of the model of the terrain sensors (102) and of the onboard maps (12), the navigation system comprising at least:

• a navigation block (10) comprising an inertial platform (101) and at least one terrain sensor (102) which are accompanied by their error models,
• at least one onboard map (12),

the method calculating a navigability map determining for a plurality of points of interest of the onboard map (12), navigability scores, the calculation method being **characterized in that** it takes into account an error model of said onboard map (12), the navigability score at a point X of the onboard map (12) is equal to the square of the norm of the terrain gradient weighted by a weighting coefficient $\alpha(X)$ taking into account relative qualities of the terrain, i.e. $\alpha(X).\|\nabla_x h_{terrain}(X)\|^2$, the weighting coefficient $\alpha(X)$ is equal to the inverse of the scalar variance of the noise at the point X, i.e. VAR(X) and the terrain gradient being defined by the gradient of the function $h=h_{terrain}$.

2. Method for calculating a navigation phase according to Claim 1, **characterized in that** the error model of the onboard map is a null model.

3. Method for calculating a navigation phase according to Claim 1, **characterized in that** VAR(X) is equal to the square of the standard deviation of the Gaussian white noise corresponding to the map error model at each point X of the terrain, the map model then being regarded as a Gaussian white noise model.

4. System for calculating a navigation phase (20) comprising a navigability map computation module (21), receiving as a first input the data arising from an error model of the onboard map (22) and the onboard map (12), **characterized in that** the module for computing the navigability map (21) implements a method for calculating a navigation phase according to any one of the preceding claims, and yields a navigability map destined for a module for optimizing the trajectory of the carrier (23).

EP 2 385 346 B1

FIG.1

FIG.2

EP 2 385 346 B1

**EP 2 385 346 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2005273257 A

**Littérature non-brevet citée dans la description**

- **INGEMAR NYGREN.** *Terrain navigation for underwater vehicles*

- **NICOLAS BERGMAN.** *Recursive Bayesian Estimation Navigation and Tracking*